Europäisches Patentamt

European Patent Office

Office européen des brevets

(19)

(11) **EP 1 311 411 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(21) Anmeldenummer: **00962233.3**

(22) Anmeldetag: **22.08.2000**

(51) Int Cl.⁷: **B60R 21/01**

(86) Internationale Anmeldenummer:
**PCT/DE2000/002854**

(87) Internationale Veröffentlichungsnummer:
**WO 2002/016169 (28.02.2002 Gazette 2002/09)**

(54) **STEUERSCHALTUNG FÜR EIN INSASSENSCHUTZMITTEL IN EINEM KRAFTFAHRZEUG UND ZUGEHÖRIGES BETRIEBSVERFAHREN**

CONTROL CIRCUIT FOR A PASSENGER PROTECTION DEVICE IN A MOTOR VEHICLE AND CORRESPONDING METHOD OF OPERATION

CIRCUIT DE COMMANDE POUR UN DISPOSITIF DE PROTECTION DES OCCUPANTS D'UN VEHICULE A MOTEUR ET PROCEDE ASSOCIE PERMETTANT DE FAIRE FONCTIONNER LEDIT CIRCUIT

(84) Benannte Vertragsstaaten:
**DE FR GB IT**

(43) Veröffentlichungstag der Anmeldung:
**21.05.2003 Patentblatt 2003/21**

(73) Patentinhaber: **SIEMENS AKTIENGESELLSCHAFT**
**80333 München (DE)**

(72) Erfinder: **SCHMIDT, Claus**
**D-93053 Regensburg (DE)**

(56) Entgegenhaltungen:
**WO-A-00/41917          WO-A-98/19171**
**DE-A- 3 736 294        DE-C- 19 619 414**

**Beschreibung**

Steuerschaltung für ein Insassenschutzmittel in einem Kraftfahrzeug und zugehöriges Betriebsverfahren

Die Erfindung betrifft eine Steuerschaltung für mindestens ein Insassenschutzmittel in einem Kraftfahrzeug gemäß dem Oberbegriff des Anspruchs 1 sowie ein zugehöriges Betriebsverfahren gemäß dem Oberbegriff des Anspruchs 13.

In modernen Kraftfahrzeugen werden Insassenschutzmittel wie Airbags, Sidebags oder Gurtstraffer verwendet, um die Schwere der bei Unfällen auftretenden Verletzungen der Insassen zu verringern. Die Auslösung der Insassenschutzmittel erfolgt hierbei durch mehrere Beschleunigungssensoren, die in dem Kraftfahrzeug angeordnet sind und die bei einem Unfall auftretende Beschleunigung jeweils in einer vorgegebenen Richtung messen. Da die einzelnen Beschleunigungssensoren räumlich unterschiedlich ausgerichtet sind, läßt sich aus den Ausgangssignalen der Beschleunigungssensoren sowohl die Richtung als auch die Größe der Beschleunigung berechnen, wobei die Insassenschutzmittel aktiviert werden, wenn die Größe der Beschleunigung einen vorgegebenen Grenzwert (z.B. 10g) übersteigt.

Aus der deutschen Offenlegungsschrift DE 196 45 952 A1 ist eine Steuerschaltung bekannt, welche die Messsignale mehrerer Beschleunigungssensoren auswertet, um einen Unfall des Kraftfahrzeugs zu erkennen und die Insassenschutzmittel in Abhängigkeit von den Messsignalen aktiviert. Weiterhin ist aus dieser Druckschrift bekannt, die Messsignale der verschiedenen Beschleunigungssensoren einem Plausibilitätstest zu unterziehen, um eine Fehlfunktion einzelner Sensoren oder der Steuerschaltung zu erkennen. Sind die verschiedenen Beschleunigungssensoren beispielsweise in einer Ebene sternförmig angeordnet, so muss die Summe der von den Beschleunigungssensoren gemessenen positiven bzw. negativen Beschleunigungen gleich Null sein. Falls das Summensignal der Beschleunigungssensoren von diesem Wert abweicht, so liegt eine Fehlfunktion eines oder mehrerer der Sensoren oder auch der Steuereinheit selbst vor. Die vorstehend beschriebene Plausibilitätsprüfung der von den Beschleunigungssensoren erzeugten Messsignale ermöglicht also vorteilhaft die Erkennung einer Fehlfunktion der Sensoren oder der die Messsignale der Beschleunigungssensoren zur Unfallerkennung analysierenden Auswertungseinheit.

Nachteilig an der vorstehend beschriebenen bekannten Steuerschaltung ist jedoch die Tatsache, dass die während des normalen Betriebs ablaufende Plausibilitätsprüfung der von den Beschleunigungssensoren gelieferten Messsignale fehlerbedingt ausfallen kann.

Zum einen kann dies zu einer unerwünschten Auslösung eines Insassenschutzmittels führen, wenn ein Beschleunigungssensor aufgrund einer Fehlfunktion einen hohen Beschleunigungswert ausgibt und die Plausibilitätsprüfung die Fehlfunktion des Sensors nicht erkennt.

Zum anderen kann ein Fehler der Plausibilitätsprüfung dazu führen, dass die Auslösung des Insassenschutzmittels bei einem Unfall gesperrt wird, obwohl die Beschleunigungssensoren einen hohen Beschleunigungswert messen.

Der Erfindung liegt also die Aufgabe zugrunde, die vorstehend beschriebene bekannte Steuerschaltung für ein Insassenschutzmittel in einem Kraftfahrzeug dahingehend zu verbessern, dass die Funktionsfähigkeit der Plausibilitätsprüfung getestet werden kann. Weiterhin liegt der Erfindung die Aufgabe zugrunde, ein Betriebsverfahren für eine derart verbesserte Steuerschaltung anzugehen.

Die Erfindung wird, ausgehend von der eingangs beschriebenen bekannten Steuerschaltung gemäß dem Oberbegriff des Anspruchs 1, durch die kennzeichnenden Merkmale des Anspruchs 1 bzw. - hinsichtlich des Betriebsverfahrens - durch die Merkmale des Oberbegriffs von Anspruch 13 gelöst.

Die Erfindung umfasst die allgemeine technische Lehre, vor oder bei dem normalen Betrieb der Steuerschaltung einen Selbsttest durchzuführen, in dem nur ein einziger Sensor oder nur ein Teil der Sensoren angeregt wird, um beispielsweise bei einem Beschleunigungssensor eine Beschleunigung zu simulieren, wohingegen die anderen Sensoren nicht oder in anderer Weise angeregt werden, so dass die Plausibilitätsprüfung normalerweise fehlerhaft ausfallen muss.

Zur Auswertung der von den Sensoren gelieferten Messsignale während des normalen Betriebs weist die erfindungsgemäße Steuerschaltung vorzugsweise eine eingangsseitig mit den Sensoren verbundene Auswertungseinheit auf, die aufgrund der gemessenen Zustandsgrößen einen Unfall erkennt und dann ein das Insassenschutzmittel aktivierendes Auslösungssignal erzeugt. Die Auswertungseinheit analysiert also während des normalen Betriebs die von den Sensoren gemessenen Zustandsgrößen, um einen Unfall zu erkennen.

Weiterhin weist die erfindungsgemäße Steuerschaltung eine Überprüfungseinheit auf, um die von den Sensoren gemessenen Zustandsgrößen einer Plausibilitätsprüfung zu unterziehen. Hierzu ist die Überprüfungseinheit eingangsseitig mit den Sensoren verbunden und erzeugt bei einer fehlgeschlagenen Plausibilitätsprüfung ausgangsseitig ein Sperrsignal, um eine Aktivierung des Insassenschutzmittels zu verhindern.

Ferner weist die erfindungsgemäße Steuerschaltung eine Logikschaltung auf, die eingangsseitig sowohl mit der Auswertungseinheit als auch mit der Überprüfungseinheit verbunden ist und ausgangsseitig das Insassenschutzmittel ansteuert, wobei die Ansteuerung des Insassenschutzmittels in Abhängigkeit von dem durch die Auswertungseinheit erzeugten Auslösungssignal und dem von der Überprüfungseinheit erzeugten Sperrsignal erfolgt.

Vorzugsweise kann der Selbsttest der Steuerschaltung von dem Benutzer eingeleitet werden. Hierzu ist das zur Anregung eines Sensors dienende Anregungselement vorzugsweise mit einem steuerbaren Schaltelement verbunden, das von dem Benutzer betätigt werden kann, um den Selbsttest einzuleiten.

Die Logikschaltung zur Ansteuerung des Insassenschutzmittels in Abhängigkeit von dem Sperrsignal und dem Auslösungssignal ist eingangsseitig vorzugsweise auch mit dem steuerbaren Schaltelement verbunden, um ein zweites Sperrsignal aufzunehmen, wobei die Logikschaltung die Aktivierung des Insassenschutzmittels in Abhängigkeit von den beiden Sperrsignalen sperrt oder freigibt.

So kann die Logikschaltung die Aktivierung des Insassenschutzmittels beispielsweise sperren, wenn das von der Überprüfungseinheit erzeugte erste Sperrsignal anliegt und die Plausibilitätsprüfung somit fehlerhaft ist, während gleichzeitig das von dem steuerbaren Schaltelement erzeugte zweite Sperrsignal nicht anliegt, da sich die Steuerschaltung im normalen Betrieb und nicht im Selbsttest-Betrieb befindet.

Weiterhin kann die Logikschaltung die Aktivierung des Insassenschutzmittels sperren, wenn während des Selbsttest-Betriebs das zweite Sperrsignal anliegt, aber das erste Sperrsignal nicht anliegt und die Plausibilitätsprüfung somit trotz der simulierten Fehlfunktion erfolgreich abgelaufen ist, was auf eine fehlerhafte Plausibilitätsprüfung schließen läßt.

In der bevorzugten Ausführungsform der erfindungsgemäßen Steuerschaltung weist die Logikschaltung ein Halteglied auf, um das von einer fehlerhaften Plausibilitätsprüfung erzeugte erste Sperrsignal auch bei einer zwischenzeitlichen erfolgreichen Plausibilitätsprüfung aufrecht zu erhalten. Die Auslösung des Insassenschutzmittels wird hierbei also nach einer fehlerhaften Plausibitätsprüfung so lange gesperrt, bis das Halteglied zurückgesetzt wird. Hierzu kann das Halteglied beispielsweise mit einem manuell bedienbaren Schaltelement verbunden sein.

Andere vorteilhafte Weiterbildungen der Erfindung sind in den Unteransprüchen gekennzeichnet bzw. werden nachstehend zusammen mit der Beschreibung des bevorzugten Ausführungsbeispiels der Erfindung anhand der Figuren erläutert. Es zeigen:

Figur 1   die erfindungsgemäße Steuerschaltung als Blockschaltbild,

Figur 2   die Anordnung der Beschleunigungssensoren in einem Kraftfahrzeug,

Figur 3   ein optionales Zusatzmodul für die in Figur 1 dargestellte Steuerschaltung sowie

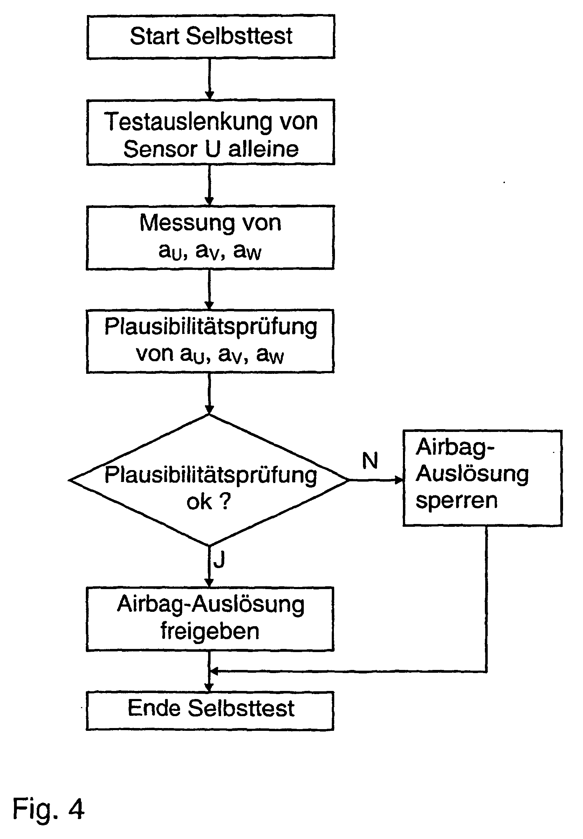

Figur 4   das erfindungsgemäße Betriebsverfahren als Flussdiagramm.

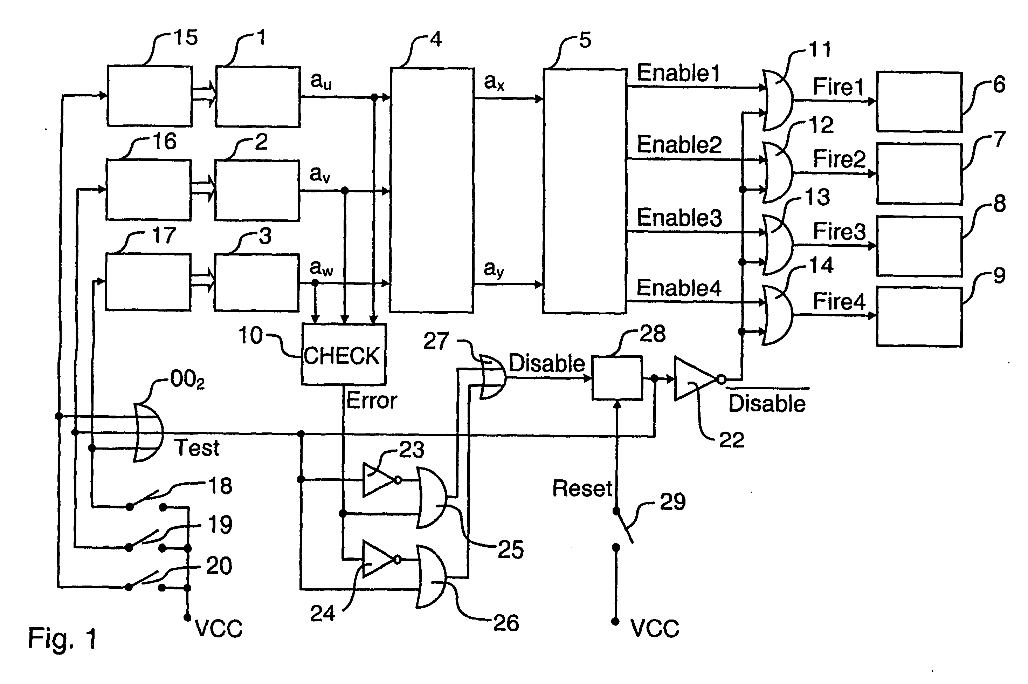

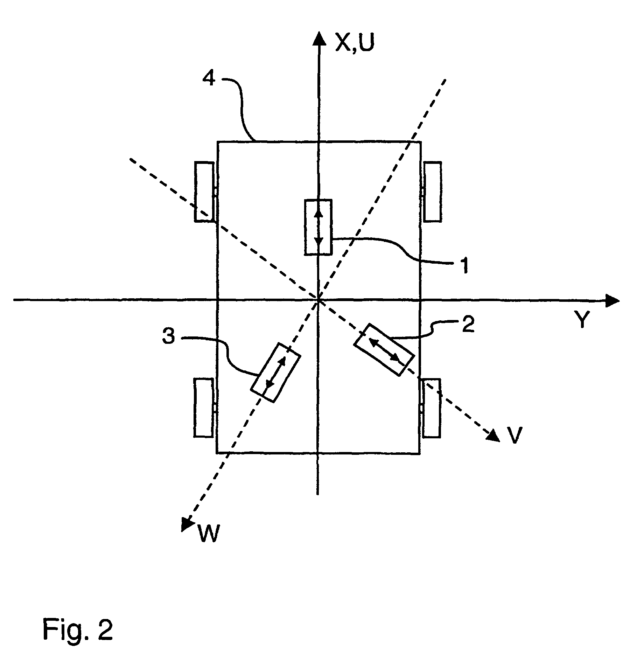

Die in Figur 1 dargestellte Steuerschaltung weist mehrere Beschleunigungssensoren 1, 2, 3 auf, die in einem Kraftfahrzeug 4 in einer waagrechten Ebene in unterschiedlichen Winkeln zur Längsachse x des Kraftfahrzeugs 4 angeordnet sind, wie aus Figur 2 ersichtlich ist.

Die Beschleunigungssensoren 1, 2, 3 sind ausgangsseitig mit einer Recheneinheit 4 verbunden, die aus den Messsignalen $a_U$, $a_V$, $a_W$ der Beschleunigungssensoren 1, 2, 3 die Beschleunigungswerte $a_x$ und $a_y$ in Fahrzeuglängsrichtung X bzw. in Fahrzeugquerrichtung Y nach folgenden Formeln berechnet:

$$a_x = a_u + a_v \dot{}\cos\angle(X,V) + a_w \dot{}\cos\angle(X,W)$$

$$a_y = a_v \dot{}\cos\angle(Y,V) + a_w \dot{}\cos\angle(Y,W).$$

Ausgangsseitig ist die Recheneinheit 4 mit einer Auswertungseinheit 5 verbunden, welche die Beschleunigungswerte $a_x$ und $a_y$ in Fahrzeuglängs- bzw. Fahrzeugquerrichtung mit vorgegebenen Maximalwerten vergleicht und beim Überschreiten der Maximalwerte Aktivierungssignale Enable1-Enable4 erzeugt, die zur Aktivierung von Insassenschutzmitteln 6, 7, 8, 9 dienen, wobei die Insassenschutzmittel 6, 7 Airbags sind, wohingegen die Insassenschutzmittel 8, 9 Sidebags sind.

Weiterhin weist die dargestellte Schaltungsanordnung eine Überprüfungseinheit 10 auf, die eingangsseitig mit den Beschleunigungssensoren 1, 2, 3 verbunden ist und eine Plausibilitätsprüfung der gemessenen Beschleunigungswerte $a_u$, $a_v$ und $a_w$ durchführt, um eine Fehlfunktion eines der Beschleunigungssensoren 1, 2, 3 zu erkennen. So berechnet die Überprüfungseinheit 10 die Summe der Beschleunigungsmesswerte $a_u$, $a_v$ und $a_w$, die bei einer ordnungsgemäßen Funktion gleich 0 sein muss. Anschließend vergleicht die Überprüfungseinheit 10 das auf diese Weise gebildete Summensignal mit einem vorgegebenen Maximalwert und gibt ein Sperrsignal Error aus, wenn das Summensignal den vorgegebenen Maximalwert überschreitet.

Ausgangsseitig ist die Überprüfungseinheit 10 über eine Logikschaltung mit den Insassenschutzmitteln 6, 7, 8, 9 verbunden, wobei die Logikschaltung vier Und-Glieder 11, 12, 13, 14 aufweist, die eingangsseitig mit der Auswertungseinheit 5 und der Überprüfungseinheit 10 und ausgangsseitig jeweils mit einem der Insassenschutzmittel 6, 7, 8, 9 verbunden sind. So wird das Insassenschutzmittel 6 beispielsweise durch ein Aktivierungssignal Fire1 aktiviert, wenn an dem Und-Glied 11 eingangsseitig das Auslösungssignal Enable 1 anliegt und das Sperrsignal Disable einen Low-Pegel annimmt. Die Auslösung der Insassenschutzmittel 6, 7, 8, 9 wird also von der Überprüfungseinheit 10 gesperrt, wenn die von der Überprüfungseinheit 10 durchgeführte Plausibilitätsprüfung fehlerhaft ausgefallen ist.

Darüber hinaus ermöglicht die dargestellte Steuerschaltung einen Selbsttest, in dem die von der Überprüfungseinheit 10 durchgeführte Plausibilitätsprüfung getestet wird. Hierzu weist die Steuerschaltung drei Anregungselemente 15, 16, 17 auf, die jeweils einem der Beschleunigungssensoren 1, 2, 3 zugeordnet sind und eine separate Anregung der Beschleunigungssensoren 1, 2, 3 ermöglichen, um eine Fehlfunktion der restlichen Beschleunigungssensoren zu simulieren. Zur Ansteuerung der Anregungselemente 15, 16, 17 sind drei steuerbare Schaltelemente 18, 19, 20 vorgesehen, die von dem Benutzer separat betätigt werden können. Bei einer Betätigung des Schaltelements 18 wird beispielsweise das Anregungselement 17 aktiviert, woraufhin der Beschleunigungssensor 3 eine Beschleunigung misst, wohingegen die Beschleunigungssensoren 1, 2 nicht angeregt werden und deshalb keine Beschleunigung messen. Bei einer alleinigen Anregung des Beschleunigungssensors 3 erzeugt die Überprüfungseinheit 10 deshalb ein Fehlersignal Error, das der bereits vorstehend erwähnten Logikschaltung zugeführt wird, die nun detaillierter beschrieben wird.

So weist die Logikschaltung ein Oder-Glied 21 auf, das eingangsseitig mit den drei Schaltelementen 18, 19, 20 verbunden ist und bei einer Betätigung mindestens eines der Schaltelemente 18, 19, 20 ausgangsseitig ein Sperrsignal Test mit einem High-Pegel erzeugt. Das Sperrsignal Test wird über einen Inverter 22 den Und-Gliedern 11, 12, 13, 14 zugeführt, um während des Selbsttests die Aktivierung der Insassenschutzmittel 6, 7, 8, 9 zu verhindern.

Im folgenden wird nun der Selbsttest der Steuerschaltung für den Fall beschrieben, dass die Beschleunigungssensoren 1, 2, 3 und die Überprüfungseinheit ordnungsgemäß arbeiten. In diesem Fall erscheint sowohl am Ausgang des Oder-Glieds 21 als auch am Ausgang der Überprüfungseinheit 10 ein High-Pegel, wobei das von der Überprüfungseinheit 10 erzeugte Sperrsignal Error und das von der im Und-Glied 21 erzeugte Sperrsignal Test über zwei Inverter 23, 24 zwei Und-Gliedern 25, 26 zugeführt werden. Die beiden Und-Glieder 25, 26 sind ausgangsseitig über ein Oder-Glied 27 mit einem Halteglied 28 verbunden, welches ein eingangsseitig anliegendes Sperrsignal Disable so lange hält, bis der Benutzer einen Rücksetzeingang Reset des Halteglieds 28 über ein Schaltelement 29 aktiviert. Das Halteglied 28 verhindert also nach einer fehlgeschlagenen Plausibilitätsprüfung eine Aktivierung der Insassenschutzmittel 6, 7, 8, 9 auch nach einer zwischenzeitlichen erfolgreichen Plausibilitätsprüfung so lange, bis das Halteglied 28 über das Schaltelement 29 zurückgesetzt wird.

Bei einer ordnungsgemäßen Funktion der beschleunigten Sensoren 1, 2, 3 und der Überprüfungseinheit 10 während des Selbsttests erscheint am Ausgang der Überprüfungseinheit 10 und am Ausgang des Oder-Glieds 21 jeweils ein High-Pegel, so dass das Signal Disable am Eingang des Halteglieds 28 einen Low-Pegel annimmt. Dies ist sinnvoll, da das an dem Ausgang der Überprüfungseinheit 10 erscheinende Sperrsignal Error während des Selbsttests zeigt, dass die Beschleunigungssensoren 1, 2, 3 und die Überprüfungseinheit 10 ordnungsgemäß arbeitet.

Bei einer Fehlfunktion der Beschleunigungssensoren 1, 2, 3 oder der Überprüfungseinheit 10 während des Selbsttests erscheint dagegen am Ausgang der Überprüfungseinheit 10 ein Low-Pegel, so dass die beiden Eingänge des Und-Gliedes 26 einen High-Pegel annehmen, der über das Oder-Glied 27 zu dem Halteglied 28 weitergeführt wird, was zu einer dauerhaften Sperrung einer Aktivierung der Insassenschutzmittel 6, 7, 8, 9 führt.

Im folgenden wird nun der Normalbetrieb der Steuerschaltung betrieben, wobei die Schaltelemente 18, 19, 20 geöffnet sind, so dass am Ausgang des Oder-Gliedes 27 ein Low-Pegel erscheint. Bei einer ordnungsgemäßen Funktion der Beschleunigungssensoren 1, 2, 3 und der Überprüfungseinheit 10 erscheint im Normalbetrieb am Ausgang der Überprüfungseinheit 10 ebenfalls ein Low-Pegel, da die Plausibilitätsprüfung dann erfolgreich verläuft. In diesem Fall erscheint auch am Eingang des Halteglieds 28 kein Sperrsignal mit einem High-Pegel, so dass die Freigabe der Insassenschutzmittel 6, 7, 8, 9 nicht gesperrt wird.

Bei einer Fehlfunktion der Sensoren 1, 2, 3 führt die Plausibilitätsprüfung durch die Überprüfungseinheit 10 dagegen zu einem High-Pegel am Ausgang der Überprüfungseinheit 10, so dass am Ausgang des Und-Gliedes 25 ein High-Pegel erscheint, der über das Oder-Glied 27 als Sperrsignal dem Halteglied 28 zugeführt wird, woraufhin die Aktivierung der Insassenschutzmittel 6, 7, 8, 9 gesperrt wird, bis das Halteglied über das Schaltelement wieder zurückgesetzt wird.

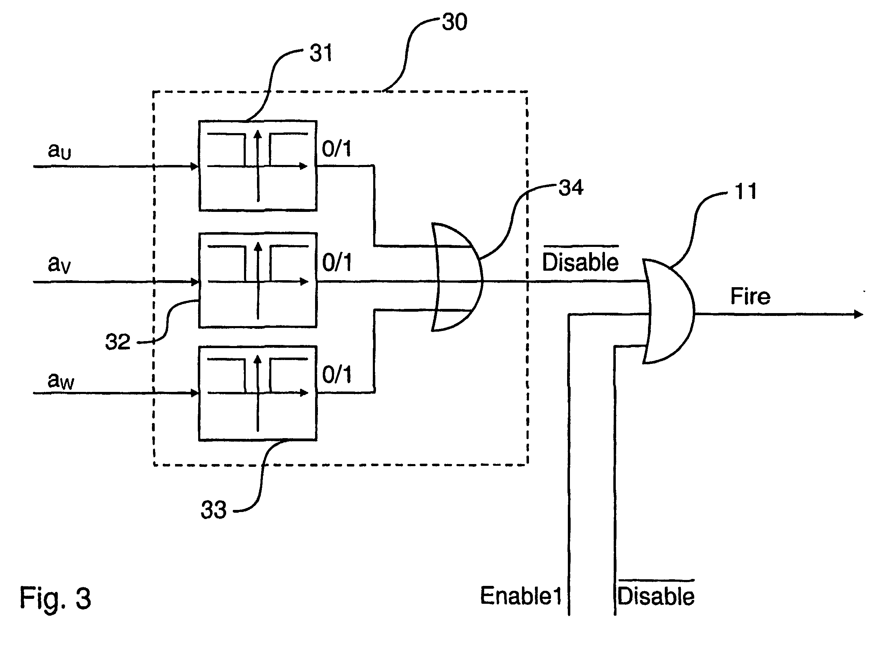

Figur 3 zeigt ein optionales Modul 30 für die vorstehend beschriebene und in Figur 1 dargestellte Steuerschaltung, wobei das Modul 30 eingangsseitig mit den drei Beschleunigungssensoren 1, 2, 3 und ausgangsseitig mit den einzelnen Und-Gliedern 11, 12, 13, 14 verbunden ist, welche die Insassenschutzmittel 6, 7, 8, 9 ansteuern. Zur Vereinfachung ist in Figur 3 nur das Und-Glied 11 dargestellt, jedoch ist das Modul 30 ausgangsseitig mit allen Und-Gliedern 11-14 verbunden, die somit jeweils drei Steuereingänge aufweisen. Das Modul 30 weist mehrere Auswertungseinheiten 31, 32, 33 auf, welche die von den Beschleunigungssensoren 1, 2, 3 gemessenen Beschleunigungswerte $a_u$, $a_v$, $a_w$ mit vorgegebenen Minimalwerten vergleichen und ausgangsseitig beim Unterschreiten der Minimalwerte einen Low-Pegel ausgeben, wobei die Auswertungseinheiten 31, 32, 33 ausgangsseitig mit einem Oder-Glied 34 verbunden sind, welches die Und-Glieder 11-14 ansteuert. Eine Aktivierung der Insassenschutzmittel 6, 7, 8, 9 wird also unabhängig von dem Ergebnis der Plausibilitätsprüfung auch dann verhindert, wenn die von den Beschleunigungssensoren 1, 2, 3, gemessenen Beschleunigungswerte alle unterhalb der Minimalwerte liegen, weil das Kraftfahrzeug beispielsweise steht.

Die Erfindung ist nicht auf das vorstehend beschriebene Ausführungsbeispiel beschränkt. Vielmehr ist eine Vielzahl von Varianten und Abwandlungen denkbar, die von dem Erfindungsgedanken Gebrauch machen und deshalb ebenfalls in den Schutzbereich fallen.

**Patentansprüche**

1. Steuerschaltung für mindestens ein Insassenschutzmittel (6-8) in einem Kraftfahrzeug, mit mehreren Sensoren (1-3) zur Erfassung jeweils einer Zustandsgröße des Kraftfahrzeugs,
einer eingangsseitig mit den Sensoren (1-3) verbundenen Auswertungseinheit zur Erzeugung eines das Insassenschutzmittel (6-8) aktivierenden Auslösungssignals (Enablel) bei einem Unfall aufgrund der gemessenen Zustandsgrößen,
einer eingangsseitig mit den Sensoren (1-3) verbunden Überprüfungseinheit (10) zur gegenseitigen Plausibilitätsprüfung der von den Sensoren (1-3) gemessenen Zustandsgrößen und zur Ausgabe eines ersten Sperrsignals (Error) für das Insassenschutzmittel (6-8) bei einer fehlerhaften Plausibilitätsprüfung, sowie
einer eingangsseitig mit der Auswertungseinheit (4, 5) und der Überprüfungseinheit (10) und ausgangsseitig mit dem Insassenschutzmittel (6-8) verbundenen Logikschaltung (11-14, 21-28) zum Sperren der Aktivierung des Insassenschutzmittels (6-8) beim Anliegen des ersten Sperrsignals (Error),
**dadurch gekennzeichnet,**
**daß** zur Simulation einer Fehlfunktion der Sensoren (1-3) und/oder der Überprüfungseinheit (10) mindestens ein Anregungselement (15-17) vorgesehen ist, das nur einen einzigen Sensor (6-8) oder nur einen Teil der Sensoren (1-3) anregt und dadurch eine Fehlfunktion der restlichen Sensoren (1-3) simuliert.

2. Steuerschaltung nach Anspruch 1,
**dadurch gekennzeichnet,**
**daß** das Anregungselement (15-17) zur steuerbaren Aktivierung mit einem ersten steuerbaren Schaltelement (18-20) verbunden ist.

3. Steuerschaltung nach Anspruch 2,
**dadurch gekennzeichnet,**
**daß** die Logikschaltung (11-14, 21-28) zur Aufnahme eines zweiten Sperrsignals (Test) für das Insassenschutzmittel (6-8) während der Simulation einer Sensorenfehlfunktion mit dem ersten steuerbaren Schaltelement verbunden ist, wobei die Logikschaltung (11-14, 21-28) die Aktivierung des Insassenschutzmittels (6-8) in Abhängigkeit von den beiden Sperrsignalen (Test, Error) sperrt oder freigibt.

4. Steuerschaltung nach Anspruch 3,
**dadurch gekennzeichnet,**
**daß** die Ligkschaltung die Aktivierung des Insassenschutzmittels (6-8) sperrt, wenn das das erste Sperrsignal (Error) anliegt und/oder das zweite Sperrsignal (Test) nicht anliegt.

5. Steuerschaltung nach Anspruch 3 oder 4,
**dadurch gekennzeichnet,**
**daß** die Logikschaltung (11-14, 21-28) die Aktivierung des Insassenschutzmittels (6-8) sperrt, wenn das das erste Sperrsignal (Error) nicht anliegt, obwohl das zweite Sperrsignal (Test) anliegt.

6. Steuerschaltung nach mindestens einer der vorhergehenden Ansprüche,
**dadurch gekennzeichnet,**
**daß** die Logikschaltung (11-14, 21-28) ein Halteglied (28) aufweist, um das nach einer fehlerhaften Plausibilitätsprüfung erzeugte erste Sperrsignal auch bei einer zwischenzeitlichen erfolgreichen Plausibilitätsprüfung aufrecht zu erhalten.

7. Steuerschaltung nach Anspruch 6,
**dadurch gekennzeichnet,**
**daß** die Logikschaltung (11-14, 21-28) das Halteglied (28) zur dauerhaften Sperrung des Insassenschutzmittels (6-8) ansteuert, wenn während der Simulation einer Sensorenfehlfunktion das zweite Sperrsignal (Test) anliegt, wohingegen das zweite Sperrsignal (Error) nicht anliegt.

8. Steuerschaltung nach Anspruch 6 oder 7,
**dadurch gekennzeichnet,**
**daß** das Halteglied (28) einen Rücksetzeingang (Reset) aufweist, um das gespeicherte Sperrsignal zu löschen.

9. Steuerschaltung nach Anspruch 8,
**dadurch gekennzeichnet,**
**daß** der Rücksetzeingang (Reset) mit einem Schaltelement (29) verbunden ist, um das Sperrsignal (Disable) manuell löschen zu können.

10. Steuerschaltung nach mindestens einem der vorhergehenden Ansprüche,
**dadurch gekennzeichnet,**
**daß** eine eingangsseitig mit den Sensoren (1-3) verbundene weitere Überprüfungseinheit (10) vorgesehen ist, welche die von den Sensoren (1-3) gemessenen Zustandsgrößen jeweils mit einem vorgegeben Minimalwert vergleicht und ein drittes Sperrsignal erzeugt, wenn alle gemessenen Zustandsgrößen die vorgegebenen Minimalwerte unterschreiten.

11. Steuerschaltung nach mindestens einem der vorhergehenden Ansprüche,
**dadurch gekennzeichnet,**
**daß** mindestens ein Sensor (6-8) ein Beschleunigungssensor oder ein Neigungssensor ist.

12. Steuerschaltung nach mindestens einem der vorhergehenden Ansprüche,
**dadurch gekennzeichnet,**
**daß** das Insassenschutzmittel (6-8) ein Airbag, ein Sidebag, ein Gurtstraffer oder ein Gurtkraftbegrenzer ist.

13. Betriebsverfahren für eine Steuerschaltung nach einem der vorhergehenden Ansprüche, mit den folgenden Schritten:

   - Messung mindestens einer Zustandsgröße des Kraftfahrzeugs durch mehrere Sensoren (1-3),
   - Auswertung der von den Sensoren (1-3) gemessenen Zustandsgrößen zur Erkennung eines Unfalls,
   - Durchführung einer gegenseitigen Plausibilitätsprüfung der von den Sensoren (1-3) gemessenen Zustandsgrößen während des normalen Betriebs,
   - Aktivierung mindestens eines Insassenschutzmittels (6-8) bei einem Unfall und einer erfolgreichen Plausibilitätsprüfung,

   **dadurch gekennzeichnet,**
   **daß** ein einziger Sensor (6-8) oder ein Teil der Sensoren (1-3) in einem Selbsttest angeregt wird, um eine Fehlfunktion der restlichen Sensoren (1-3) zu simulieren, wobei die Aktivierung des Insassenschutzmittels (6-8) gesperrt wird, wenn die Plausibilitätsprüfung trotz der simulierten Fehlfunktion der Sensoren (1-3) fehlerlos verläuft.

14. Betriebsverfahren nach Anspruch 13,
daß die Aktivierung des Insassenschutzmittels (6-8) dauerhaft gesperrt wird, wenn die Plausibilitätsprüfung im normalen Betrieb fehlerhaft und/oder im Selbsttest fehlerlos verlaufen.

15. Betriebsverfahren nach Anspruch 13 oder 14,
**dadurch gekennzeichnet,**
**daß** die von den Sensoren (1-3) gemessenen Zustandsgrößen mit vorgegebenen Minimalwerten verglichen werden, wobei die Aktivierung des Insassenschutzmittels (6-8) gesperrt wird, wenn alle von den Sensoren (1-3) gemessenen Zustandsgrößen unterhalb der Minimalwerte liegen.

**Claims**

1. Control circuit for at least one vehicle-occupant protection system (6-8) in a motor vehicle, having a plurality of sensors (1-3) for detecting a respective parameter of the motor vehicle, an evaluation unit which is connected to the sensors (1-3) at the input end for generating a triggering signal (Enable1) which activates the vehicle-occupant protection system (6-8) on the basis of the measured parameters when there is an accident, a check unit (10), which is connected to the sensors (1-3) at the input end, for checking the mutual plausibility of the parameters which are measured by the sensors (1-3) and for outputting a first disable signal (Error) for the vehicle-occupant protection system (6-8) in the case of an errored plausibility check, and a logic circuit (11-14, 21-28), which is connected at the input end to the evaluation unit (4, 5) and to the check unit (10) and at the output end to the vehicle-occupant protection system (6-8), for disabling the activation of the vehicle-occupant protection system (6-8) when the first disable signal (Error) is present,
**characterized**
**in that**, in order to simulate a malfunction of the sensors (1-3) and/or of the check unit (10), at least one excitation element (15-17) is provided which excites only a single sensor (6-8) or some of the sensors (1-3) and thus simulates a malfunction of the rest of the sensors (1-3).

2. Control circuit according to Claim 1, **characterized in that** the excitation element (15-17) is connected to a first controllable switching element (18-20) in order to perform controllable activation.

3. Control circuit according to Claim 2, **characterized in that**, in order to receive a second disable signal (Test) for the vehicle-occupant protection system (6-8), the logic circuit (11-14, 21-28) is connected to the first controllable switching element during the simulation of a sensor malfunction, the logic circuit (11-14, 21-28) disabling or enabling the activation of the vehicle-occupant protection system (6-8) as a function of the two disable signals (Test, Error).

4. Control circuit according to Claim 3, **characterized in that** the logic circuit disables the activation of the vehicle-occupant protection system (6-8) if the first disable signal (Error) is present and/or the second disable signal (Test) is not present.

5. Control circuit according to Claim 3 or 4, **characterized in that** the logic circuit (11-14, 21-28) disables the activation of the vehicle-occupant protection system (6-8) if the first disable signal (Error) is not present although the second disable signal (Test) is present.

6. Control circuit according to at least one of the preceding claims, **characterized in that** the logic circuit (11-14, 21-28) has a sample-and-hold element (28) in order to maintain the first disable signal, generated after an errored plausibility check, even if there was a successful plausibility check in the meantime.

**7.** Control circuit according to Claim 6, **characterized in that** the logic circuit (11-14, 21-28) actuates the sample-and-hold element (28) in order to permanently disable the vehicle-occupant protection system (6-8) if, during the simulation of a sensor malfunction, the second disable signal (Test) is present whereas the first disable signal (Error) is not present.

**8.** Control circuit according to Claim 6 or 7, **characterized in that** the sample-and-hold element (28) has a resetting input (Reset) in order to delete the stored disable signal.

**9.** Control circuit according to Claim 8, **characterized in that** the resetting input (Reset) is connected to a switching element (29) in order to be able to be delete the disable signal (Disable) manually.

**10.** Control circuit according to at least one of the preceding claims, **characterized in that** a further check unit (10) which is connected to the sensors (1-3) at the input end is provided, said check unit (10) comparing the parameters measured by the sensors (1-3) in each case with a predefined minimum value and generating a third disable signal if all the measured parameters drop below the predefined minimum values.

**11.** Control circuit according to at least one of the preceding claims, **characterized in that** at least one sensor (6-8) is an acceleration sensor or an angle of inclination sensor.

**12.** Control circuit according to at least one of the preceding claims, **characterized in that** the vehicle-occupant protection system (6-8) is an airbag, a side bag, a seatbelt pretensioner or a seatbelt force limiter.

**13.** An operating method for a control circuit according to one of the preceding claims, having the following steps:

- at least one parameter of the motor vehicle is measured by means of a plurality of sensors (1-3),
- the parameters which are measured by the sensors (1-3) are evaluated in order to detect an accident,
- a mutual plausibility check of the parameters measured by the sensors (1-3) is carried out during normal operation,
- at least one vehicle-occupant protection system (6-8) is activated when there is an accident and a successful plausibility check,

**characterized in that** a single sensor (6-8) or some of the sensors (1-3) are excited in a self-test in order to simulate a malfunction of the rest of the sensors (1-3), the activation of the vehicle-occupant protection system (6-8) being disabled if the plausibility check proceeds without errors despite the simulated malfunction of the sensors (1-3).

**14.** Operating method according to Claim 13, **characterized in that** the activation of the vehicle-occupant protection system (6-8) is permanently disabled if the plausibility check is errored in the normal operating mode and/or has proceeded without errors in the self-test and/or [lacuna].

**15.** Operating method according to Claim 13 or 14, **characterized in that** the parameters which are measured by the sensors (1-3) are compared with predefined minimum values, the activation of the vehicle-occupant protection system (6-8) being disabled if all the parameters measured by the sensors (1-3) are below the minimum values.

## Revendications

**1.** Circuit de commande pour au moins un dispositif de protection (6-8) des occupants d'un véhicule à moteur, avec

- plusieurs détecteurs (1-3) pour déterminer chacun une grandeur d'état du véhicule à moteur,
- une unité d'exploitation raccordée à l'entrée avec les détecteurs (1-3) pour la production d'un signal de déclenchement (Enable1) activant le dispositif (6-8) de protection des occupants lors d'un accident, sur la base des grandeurs d'état mesurées,
- une unité de contrôle (10) raccordée à l'entrée avec les détecteurs (1-3) pour le contrôle de plausibilité réciproque des grandeurs d'état mesurées par les détecteurs (1-3) et pour l'émission d'un premier signal de blocage (Error) pour le dispositif (6-8) de protection des occupants lors d'un contrôle de plausibilité défectueux, ainsi que
- un circuit logique (11-14, 21-28) raccordé à l'entrée avec l'unité d'exploitation (4, 5) et l'unité de contrôle (10) et à la sortie avec le dispositif (6-8) de protection des occupants pour bloquer l'activation du dispositif (6-8) de protection des occupants lors de la présence du premier signal de blocage (Error)

**caractérisé en ce que**

- il est prévu, pour la simulation d'un défaut de fonctionnement des détecteurs (1-3) et/ou de l'unité de contrôle (10), au moins un élément d'excitation (15-17) qui excite uniquement un seul détecteur (1-3) ou seulement une partie des détecteurs (1-3) et simule de la sorte un défaut de fonctionnement des détecteurs restants (1-3).

2. Circuit de commande selon la revendication 1, **caractérisé en ce que** l'élément d'excitation (15-17) est raccordé à un premier élément de commutation réglable (18-20) en vue d'une activation réglable.

3. Circuit de commande selon la revendication 2, **caractérisé en ce que** le circuit logique (11-14, 21-28) est raccordé au premier élément de commutation réglable en vue de recevoir un deuxième signal de blocage (Test) pour le dispositif (6-8) de protection des occupants pendant la simulation d'un défaut de fonctionnement des détecteurs, dans lequel le circuit logique (11-14, 21-28) bloque ou libère l'activation du dispositif (6-8) de protection des occupants en fonction des deux signaux de blocage (Test, Error).

4. Circuit de commande selon la revendication 3, **caractérisé en ce que** le circuit logique bloque l'activation du dispositif (6-8) de protection des occupants lorsque le premier signal de blocage (Error) est présent et/ou lorsque le deuxième signal de blocage (Test) n'est pas présent.

5. Circuit de commande selon la revendication 3 ou 4, **caractérisé en ce que** le circuit logique (11-14, 21-28) bloque l'activation du dispositif (6-8) de protection des occupants lorsque le premier signal de blocage (Error) n'est pas présent, bien que le deuxième signal de blocage (Test) soit présent.

6. Circuit de commande selon au moins l'une des revendications précédentes, **caractérisé en ce que** le circuit logique (11-14, 21-28) présente un organe de maintien (28), pour maintenir le premier signal de blocage produit après un contrôle de plausibilité défectueux, même avec un contrôle de plausibilité intermédiaire réussi.

7. Circuit de commande selon la revendication 6, **caractérisé en ce que** le circuit logique (11-14, 21-28) commande l'organe de maintien (28) pour le blocage durable du dispositif (6-8) de protection des occupants, lorsque le deuxième signal de blocage (Test) est présent alors que le premier signal de blocage (Error) n'est pas présent pendant la simulation d'un défaut de fonctionnement des détecteurs.

8. Circuit de commande selon la revendication 6 ou 7, **caractérisé en ce que** l'organe de maintien (28) présente une entrée de remise à zéro (Reset), pour effacer le signal de blocage mémorisé.

9. Circuit de commande selon la revendication 8, **caractérisé en ce que** l'entrée de remise à zéro (Reset) est raccordée à un élément de commutation (29), afin de pouvoir effacer manuellement le signal de blocage (Disable).

10. Circuit de commande selon au moins l'une des revendications précédentes, **caractérisé en ce qu'**il est prévu une autre unité de contrôle (10) raccordée à l'entrée avec les détecteurs (1-3), qui compare les grandeurs d'état mesurées par les détecteurs (1-3) respectivement avec une valeur minimale prédéterminée et produit un troisième signal de blocage, lorsque toutes les grandeurs d'état mesurées sont inférieures à la valeur minimale prédéterminée.

11. Circuit de commande selon au moins l'une des revendications précédentes, **caractérisé en ce qu'**au moins un détecteur (1-3) est un détecteur d'accélération ou un détecteur d'inclinaison.

12. Circuit de commande selon au moins une des revendications précédentes, **caractérisé en ce que** le dispositif (6-8) de protection des occupants est un airbag, un airbag latéral, un tendeur de ceinture ou un limiteur d'effort de ceinture.

13. Procédé de conduite d'un circuit de commande selon l'une quelconque des revendications précédentes, comportant les étapes suivantes:

- mesure d'au moins une grandeur d'état du véhicule à moteur au moyen de plusieurs détecteurs (1-3),
- exploitation des grandeurs d'état mesurées par les détecteurs (1-3) pour l'identification d'un accident,
- exécution d'un contrôle de plausibilité réciproque des grandeurs d'état mesurées par les détecteurs (1-3) pendant le fonctionnement normal,
- activation d'au moins un dispositif (6-8) de protection des occupants lors d'un accident et d'un contrôle de plausibilité réussi,

   **caractérisé en ce que**
   on excite un seul détecteur (1-3) ou une partie des détecteurs (1-3) au cours d'un autocontrôle, afin de simuler un défaut de fonctionnement des détecteurs restants (1-3), l'activation du dispositif (6-8) de protection des occupants étant bloquée lorsque le contrôle de plausibilité s'effectue sans défaut malgré le défaut de fonctionnement simulé des détecteurs (1-3).

**14.** Procédé de conduite selon la revendication 13, **caractérisé en ce que** l'activation du dispositif (6-8) de protection des occupants est bloquée durablement lorsque le contrôle de plausibilité s'avère défectueux en fonctionnement normal et/ou sans défaut en autocontrôle.

**15.** Procédé de conduite selon la revendication 13 ou 14, **caractérisé en ce que** l'on compare les grandeurs d'état mesurées par les détecteurs (1-3) avec des valeurs minimales prédéterminées, l'activation du dispositif (6-8) de protection des occupants étant bloquée lorsque toutes les grandeurs d'état mesurées par les détecteurs (1-3) sont inférieures aux valeurs minimales.

Fig. 1

EP 1 311 411 B1

Fig. 2

Fig. 3

```
┌─────────────────────────┐
│     Start Selbsttest     │
└─────────────────────────┘
              │
              ▼
┌─────────────────────────┐
│   Testauslenkung von     │
│    Sensor U alleine      │
└─────────────────────────┘
              │
              ▼
┌─────────────────────────┐
│      Messung von         │
│      aU, aV, aW          │
└─────────────────────────┘
              │
              ▼
┌─────────────────────────┐
│  Plausibilitätsprüfung   │
│     von aU, aV, aW       │
└─────────────────────────┘
              │
              ▼
```

Messung von $a_U$, $a_V$, $a_W$

Plausibilitätsprüfung von $a_U$, $a_V$, $a_W$

Plausibilitätsprüfung ok ?

N → Airbag-Auslösung sperren

J

Airbag-Auslösung freigeben

Ende Selbsttest

Fig. 4